# EUROPEAN PATENT SPECIFICATION

(11) **EP 2 492 143 B1**
(45) Date of publication and mention of the grant of the patent: **07.08.2013**
(21) Application number: 11156167.6
(22) Date of filing: 28.02.2011
(51) Int. Cl.: B60Q 3/02, F16H 59/02, F16H 59/10, F16H 63/42

(54) **Gear shift lever knob**
Schalthebelknauf
Pommeau de levier de changement de vitesses

(43) Date of publication of application: 29.08.2012
(73) Proprietor: Volvo Car Corporation, 40 531 Göteborg (SE)
(72) Inventor: Persson, Sven-Olof, 43540, Mölnlycke (SE); Göthlin, Jonas, 42343, Torslanda (SE)

(56) References cited:
- EP-A1- 0 758 062
- DE-C1- 4 228 982
- DE-U1-202004 020 779
- US-A1- 2004 095 778

## Description

### TECHNICAL FIELD

The present disclosure relates to a gear shift lever knob according to the preamble of claim 1 and as it is disclosed in US 20040095778 A. The disclosure also relates to a knob cavity cover, shaped to cover an opening of a knob cavity in such a gear shift lever knob. In addition the disclosure relates to a vehicle comprising such a gear shift lever knob.

### BACKGROUND

It is known to provide a gear shift graphics on a gear shift lever knob for a vehicle. The gear shift graphics illustrates the positions of the gear lever and helps a driver of the vehicle to engage the appropriate gears. The gear shift lever knob may further comprise means for indicating a selected gear.

When operating a vehicle when in darkness, it may sometimes be difficult to locate the gear shift lever knob since the darkness makes it difficult to see the gear shift lever knob without an additional light source.

Document US 2008/0094199 A1 discloses an illuminated gear shift lever knob. A display comprises a gear shift graphics plate with a plurality of light emitting elements disposed around a gear shift graphics. The gear shift graphics includes terminal points indicating a gear selection by illuminating the corresponding light emitting element.

Document US 6,834,987 B2 discloses a kit for retrofitting gear shift lever knobs. The kit comprises a retrofit knob cavity cover to replace an existing knob cavity cover. The retrofit cover has a lens aperture and a switch aperture. The lens aperture receives a lens comprising a transparent portion. A light illuminating means is positioned to be disposed within the knob cavity when the existing knob cavity cover is replaced by the retrofit knob cavity cover. A portion of the illuminating means extends within an illuminating well illuminating the lens when activated. A switching means having a portion extending into the switch aperture activates the illuminating means. A label may be adhered to the back of the lens to be viewed through the lens aperture. In an embodiment a light energizable material, such as a phosphorus paint, may be connected to the lens, e.g. coated at its back side. The light energizable material is energized by the light illuminating means.

Document DE 20 2004 02 779 U1 relates to a lighting system for lighting a display on a gearshift lever. It has a transparent cover provided with symbols to be subjected to punctiform illumination from behind for functional and search lighting by LED:s mounted on a support.

However, although the two documents mentioned above disclose gear shift lever knobs which may more easily be able to be located in darkness, the prior art solutions are rather complicated, involving various small parts and/or assembly steps. There is therefore a need for an improved gear shift lever knob comprising fewer parts and/or being simpler to manufacture.

### SUMMARY

The object of the present disclosure is to overcome or ameliorate at least one of the disadvantages of the prior art, or to provide a useful alternative.

The object above may be achieved by the subject-matter of claim 1.

Thus, in a first embodiment, there is provided a gear shift lever knob comprising
- a knob body,
- a knob cavity within the knob body, the knob cavity having an opening,
- a knob cavity cover, shaped to cover the opening of the knob cavity, the knob cavity cover being at least partly transparent, and
- a first illuminating means connected to the knob cavity cover, such that the knob cavity cover forms a first light guide for guiding light from the first illuminating means, characterized in that a gear shift graphics is integrated into the knob cavity cover.

By being transparent is meant having the physical property of transmitting light without appreciable scattering so that bodies lying beyond the knob cavity cover are seen clearly. It is thus possible to see through the knob cavity cover.

By integrated is meant that the gear shift graphics is formed in one piece with the knob cavity cover. There is no additional material added, such as an extra layer comprising a label of the gear shift graphics. Instead the gear shift graphics may be formed within the knob cavity cover, e.g. by removing material of the knob cavity cover or by locally changing its material properties. This facilitates production, since an additional material, and a process step to apply the additional material, can be omitted. Since the gear shift graphics is integrated into the knob cavity cover, there is further no risk that the gear shift graphics will separate from the knob cavity cover. Additionally, the gear shift graphics will have a protected localization, protecting it from external wear, for example caused by a driver wearing rings on the hand used for gear shifting.

A gear shift graphics indicates selectable gear lever positions. The gear shift lever knob according to the disclosure may be used for vehicles with either manual or automatic transmission. Consequently, the gear shift graphics may indicate manual gears or automatic gears. The gear shift graphics can be varied independently of the first illuminating means.

The first illuminating means may be an illuminating source, such as an LED or a light bulb. It may also comprise a group of illuminating sources, such as a red, a green and a blue LED, which may be combined in order to provide a plurality of different colours of the light. The light is used to illuminate the gear shift graphics such that it is easily visible without an additional light source even in darkness or obscured visibility. The first illuminating means is preferably located at a lower end of the knob cavity cover, such that it can be covered by for example the knob body. Thereby the first illuminating means itself cannot be directly seen from the outside of the gear shift lever knob.

The first light guide is formed by the knob cavity cover, i.e. the light guide itself forms a clearly visible part of the gear shift lever knob.

The knob body and the knob cavity cover may be manufactured independently of each other. In one embodiment, the same kind of knob body may be used for different knob cavity covers having gear shift graphics for different transmissions, e.g. manual ones having 4, 5 or 6 gears or automatic ones.

The gear shift lever knob may have a knob cavity cover which is releasably attachable to the knob body. Thereby the gear shift graphics may easily be exchanged. The exchange may be arranged to only be made during production, by a workshop or by the user of the gear shift lever knob himself. Thereby the appearance of the gear shift graphics may be adapted to the appearance of the vehicle in which it is located, e.g. by having a sports look or a luxury look.

A background plate may be arranged within the knob cavity below the knob cavity cover in an at least partly overlapping way, the background plate preferably being at least partly reflective. The term "below" indicates the position when the gear shift lever knob is mounted in a vehicle. The background plate will reflect light upwards towards the user of the gear shift lever knob. Since the background plate and the knob cavity cover at least partly overlap, the background plate may be seen through the knob cavity cover. Preferably, there is an overlap in at least the region of the knob cavity cover comprising the gear shift graphics. The background plate will thus provide a background to the gear shift graphics integrated in the knob cavity cover.

The background plate may be releasably attachable to the knob body. Therefore the background plate may easily be exchanged. The exchange may be arranged to only be made during production, by a workshop or by the user of the gear shift lever knob himself. Thereby the appearance of the background may be adapted to the appearance of the vehicle in which it is located, e.g. by having a sports look or a luxury look. This facilitates production, since the same knob body may be used for manufacturing gear shift lever knobs with different appearances. This makes it easier to manufacture a plurality of different variants of the gear shift lever knob, especially since the knob cavity cover comprising the gear shift graphics can be varied independently of the background plate.

A gap g may be provided between the gear shift graphics and the background plate. The gap may provide a distance between the background plate and the knob cavity cover. The gap gives the gear shift graphics a three dimensional impression and makes it appear to float inside the gear shift lever knob above the background plate. The size of the gap may be adapted to the size of the gear shift lever knob. For example, the gap g may fulfil 0 < g ≤ 12 mm, preferably 1 ≤ g ≤ 10 mm and most preferably 2 ≤ g ≤ 8 mm.

The gear shift graphics may be formed within the knob cavity cover as a recess in the knob cavity cover, for example by means of moulding, embossing, milling, etching or laser engraving. When the knob cavity cover is mounted in the gear shift lever knob, the recess is preferably directed towards the interior of the gear shift lever knob. The gear shift graphics may be formed at the same time and in the same step as the knob cavity cover. If the knob cavity cover is manufactured by plastics moulding, the gear shift graphics may be formed by the shape of the tool having a protrusion corresponding to the shape of the recess in the knob cavity cover. Alternatively, the recess may be formed in a separate step afterwards, e.g. by milling, etching or laser engraving. The recess may be between 0.1 and 5 mm deep, preferably between 0.5 and 4 mm deep, most preferably between 1 and 3 mm deep. The depth of the recess is preferably adapted to the thickness of the knob cavity cover, such that the remaining material has sufficient strength to provide the requisite mechanical properties of the knob cavity cover. The knob cavity cover may be between 1 and 8 mm thick, preferably between 2 and 6 mm and most preferably between 3 and 5 mm.

As an alternative, the gear shift graphics may be formed within the knob cavity cover by means of a local modification of optical properties of the knob cavity cover. One conceivable way is to locally change the transparency of the knob cavity cover in a region corresponding to the gear shift graphics, such that in the region the light is diffusedly scattered. This may for example be done by changing the crystalline structure of the material of the knob cavity cover. Since the gear shift graphics in this case is located inside the knob cavity cover, the underlying non-modified material of the knob cavity cover will provide a distance between the optional background plate and the gear shift graphics, such that the above-mentioned gap g between the gear shift graphics and the background plate may be provided within the knob cavity cover. Thereby the gear shift lever knob can be made more compact.

The gear shift lever knob may further comprise at least one second illuminating means for indicating a selected gear lever position. Thereby a driver of the vehicle can see which gear lever position is currently selected.

The second illuminating means may be connected to a first end of a second light guide, the second light guide having a second end directed towards the gear shift graphics. The second end of the second light guide is thus used for indicating a selected gear lever position, for example by arranging the second end of the second light guide to be directed towards a position indicative of an individual gear lever position in the gear shift graphics.

In the case that a gear shift lever knob comprising a background plate is used, the second light guide may pass through a hole in the background plate such that the first end is connected to the second illuminating means at a side of the background plate facing away from the knob cavity cover, and the second end may protrude beyond the background plate towards the knob cavity cover. The distance d between the second end of the second light guide and the knob cavity cover may fulfil 0 ≤ d ≤ g, with g being the gap between the gear shift graphics and the background plate, preferably 0 < d ≤ 4 mm and most preferably, 0 < d ≤ 2 mm. It is thus preferred that the second end of the second light guide is not in direct contact with the knob cavity cover. If the gear shift graphics is formed as a recess in the knob cavity cover, the second light guide may protrude into the recess.

The gear shift lever knob may be used as a manual transmission gear shift lever knob or an automatic transmission gear shift lever knob. Thus it does not matter what kind of transmission is used in the vehicle, in which the gear shift lever knob is mounted or is to be mounted.

In a second embodiment of the disclosure there is provided a knob cavity cover, shaped to cover an opening of a knob cavity in a gear shift lever knob as described above, the knob cavity cover being at least partly transparent, and comprising a gear shift graphics integrated into the knob cavity cover. The gear shift graphics may be formed in any of the ways described above. The knob cavity cover may be used and sold as an exchange part, for example in order to upgrade or retrofit existing gear shift lever knobs.

In a third embodiment of the disclosure there is provided a background plate adapted to fit in the knob cavity of a gear shift lever knob as described above. The background plate may be used and sold as an exchange part, for example in order to upgrade or retrofit existing gear shift lever knobs. In addition, the knob cavity cover and the background plate may be sold as a kit.

In a fourth embodiment of the disclosure there is provided a gear shift lever comprising a gear shift lever knob as described above.

In a fifth embodiment of the disclosure there is provided a vehicle comprising a gear shift lever knob according to any one of the preceding claims. The vehicle may be a car, bus, lorry or truck.

### BRIEF DESCRIPTION OF THE DRAWINGS

The present invention will hereinafter be further explained by means of non-limiting examples with reference to the appended drawings wherein:
- Fig. 1: is a schematic drawing of a gear shift lever knob according to the invention;
- Fig. 2: is a cross-sectional view along line II-II of Fig. 1;
- Fig. 3: is a schematic drawing of a gear shift lever knob according to a second embodiment of the invention;
- Fig. 4: is a schematic drawing of a gear shift lever knob according to a third embodiment of the invention;
- Fig. 5: is a cross-sectional view along line V-V of Fig. 4.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

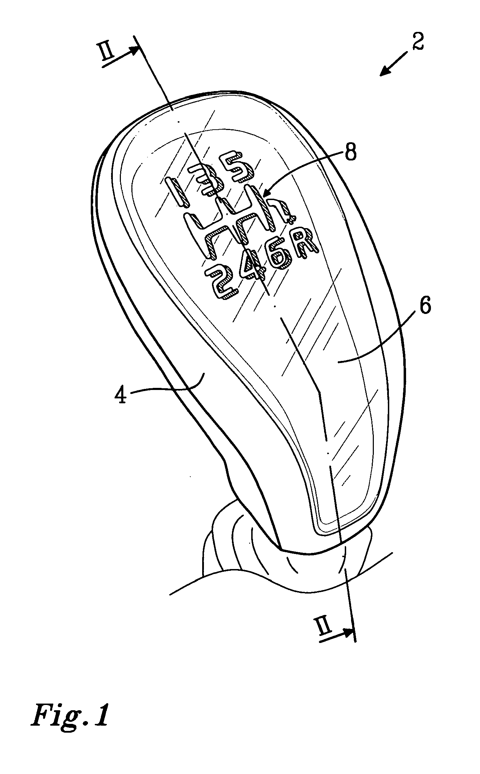

Figure 1 schematically illustrates a gear shift lever knob 2 according to the invention. The exterior of the gear shift lever knob 2 comprises a knob body 4 and a knob cavity cover 6. The knob cavity cover 6 is shaped so as to cover an opening of a knob cavity located within the knob body 4. The knob cavity cover 6 is at least partly transparent. A gear shift graphics 8 is integrated into the knob cavity cover 6. In this example the gear shift graphics 8 indicates the positions of the gear lever for a six-speed gear box, but in general the gear shift graphics may have any number of gears and may be used for either manual or automatic transmission.

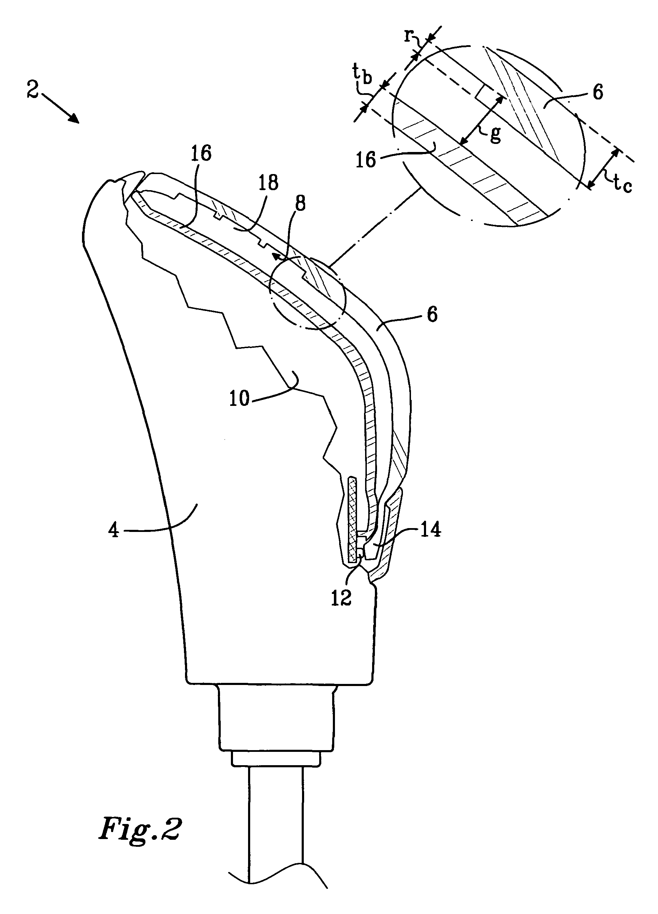

Figure 2 is a cross-sectional view of the gear shift lever knob 2 of Figure 1 along the line II-II. It can be seen that the knob body 4 encompasses a knob cavity 10. As explained above, the opening of the knob cavity 10 is covered by the knob cavity cover 6. A first illuminating means 12, e.g. an LED, is connected to the knob cavity cover 6, such that the knob cavity cover 6 forms a first light guide for guiding light from the first illuminating means 12. The light is used to illuminate the gear shift graphics 8 such that the gear shift graphics 8 is easily visible even in darkness or obscured visibility. In this example, the knob body 4 partly covers a lower region 14 of the knob cavity cover 6, such that the first illuminating means 12 cannot be seen from the outside of the gear shift lever knob 2.

A background plate 16 is arranged within the knob cavity 10 below the knob cavity cover 6 in an at least partly overlapping way, the background plate 16 preferably being at least partly reflective. Preferably, there is an overlap in at least the region of the knob cavity cover 6 comprising the gear shift graphics 8. The background plate 16 may have a thickness t_{b} of between 0.5 and 5 mm.

A gap g is provided between the gear shift graphics 8 and the background plate 16. The gap g provides a distance between the background plate 16 and the knob cavity cover 6. This imparts a three dimensional impression on the gear shift graphics 8 and makes it appear to float inside the gear shift lever knob 2 above the background plate 16. The size of the gap g may be adapted to the size of the gear shift lever knob 2. For example, the gap g may fulfil 0 < g ≤ 12 mm, preferably 1 ≤ g ≤ 10 mm and most preferably 2 ≤ g ≤ 8 mm.

The knob cavity cover 6 is at least partly transparent and may be made of a polymeric material or glass. It is appropriate to use thermoplastics such as PMMA, i.e. Poly(methyl methacrylate), or PC, i.e. polycarbonate. Its thickness t_{c} may be between 1 and 8 mm , preferably between 2 and 6 mm and most preferably between 3 and 5 mm, when measured outside of the gear shift graphics 8. The knob cavity cover 6 may have a varying thickness, in which case the thickness t_{c} is to be interpreted as an average thickness.

In Figure 2, the gear shift graphics 8 is formed as a recess 18 in the knob cavity cover 6. The recess 18 is directed towards the knob cavity 10. The gear shift graphics 8 may be formed at the same time and in the same step as the knob cavity cover 6, especially if the knob cavity cover 6 is formed of thermoplastics by moulding. Alternatively, the recess 18 may be formed in a separate step afterwards, e.g. by milling, etching or laser engraving. The recess 18 may have a depth r of between 0.1 to 5 mm, preferably 0.5 to 4 mm, most preferably 1 to 3 mm. The depth r of the recess 18 is adapted to the thickness t_{c} of the knob cavity cover 6, such that the remaining material above the recess 18 has sufficient strength to provide the requisite mechanical properties of the knob cavity cover 6. In the case that the gear shift graphics 8 is formed by a recess 18, the gap g is measured between the background plate 16 and the recess 18. The gap g then is at least as deep as the depth r of the recess 18, but preferably the gap g is greater such that a distance is also formed between the knob cavity cover 6 and the background plate beyond the gear shift graphics 8.

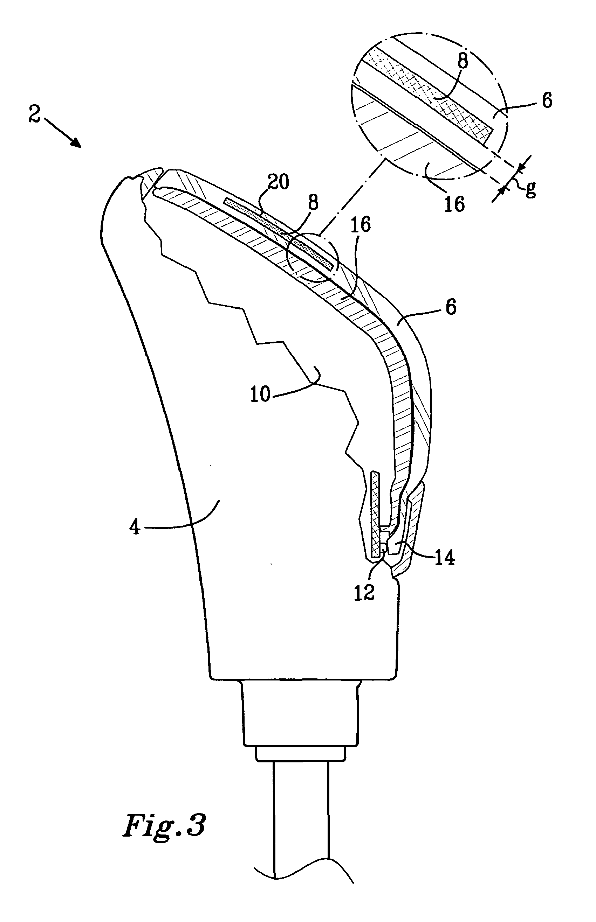

Figure 3 illustrates an alternative embodiment of the gear shift lever knob according to the invention. The gear shift graphics 8 is formed within the knob cavity cover 6, e.g. by means of a local modification 20 of optical properties of the knob cavity cover. One conceivable way is to locally change the transparency of the knob cavity cover 6 in a region corresponding to the gear shift graphics 8, such that in that region, the light is diffusedly scattered. This may for example be achieved by changing the crystalline structure of the material of the knob cavity cover 6. Since the gear shift graphics 8 in this case is located within the knob cavity cover 6, the underlying non-modified material of the knob cavity cover 6 will provide a distance between the background plate 16 and the gear shift graphics 8 such that the gap g may be provided within the knob cavity cover 6, resulting in a more compact gear shift lever knob 2.

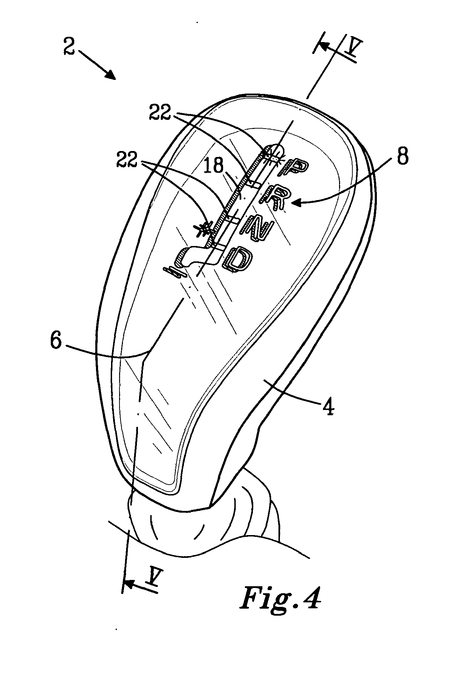

Figure 4 schematically illustrates another gear shift lever knob 2 according to the invention, being similar to that of Figure 1, but instead having a gear shift graphics 8 for an automatic transmission. The knob body 4, as well as the knob cavity cover 6, has a similar shape to that of Figure 1 and 2. This is efficient from a production point of view, since the same tools can be made to manufacture gear shift lever knobs 2 for different transmissions as long as the gear shift graphics 8 is adapted to the transmission to be used in the actual vehicle in which the gear shift lever knob 2 is to be mounted. This also facilitates mounting in the vehicle on the assembly line for the vehicle, since the same assembly tools can be used for different gear shift lever knobs.

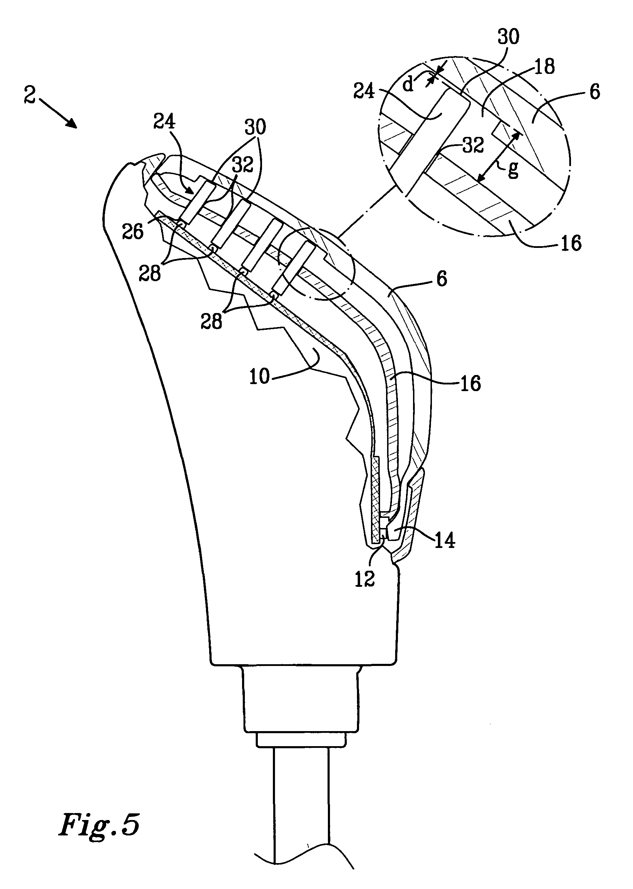

As can be seen from Figure 4, it is possible to indicate which individual gear lever position is selected by illuminating a gear lever position indicator 22 indicating the selected position. For example if P, i.e. Parking, has been selected, the gear lever position indicator 22 next to P in the gear shift graphics 8 will be illuminated and the other gear lever position indicators 22 will be extinguished. This is further explained in conjunction with Figure 5. Although Figure 4 illustrates an automatic transmission, gear lever position indicators 22 may also be used in a gear shift graphics for a manual transmission.

Figure 5 is a cross-sectional view of the gear shift lever knob 2 of Figure 4 along the line V-V passing through the gear lever position indicators 22. It can be seen that there is a corresponding second light guide 24 for each gear lever position indicator 22. The second light guide 24 has a first end 26 connected to a second illuminating means 28, e.g. an LED and a second end 30 protruding beyond the background plate 16 towards the knob cavity cover 6. The second light guide 24 passes through a corresponding hole 32 in the background plate 16. The distance d between the second end 30 of the second light guide 24 and the knob cavity cover 6 may fulfil 0 ≤ d ≤ g, with g being the gap between the gear shift graphics 8 and the background plate 16, preferably 0 < d ≤ 4 mm and most preferably, 0 < d ≤ 2 mm. It is thus preferred that the second end 30 of the second light guide 24 is not in direct contact with the knob cavity cover 6. If the gear shift graphics is formed as a recess 18 in the knob cavity cover 6, the second light guide 24 may protrude into the recess 18, as seen in Figure 5. The second light guide 24 may be made of the same material as the knob cavity cover 6. The second light guide 24 may have any elongate form, for example being a cylinder or a rectangular parallelepiped.

## Claims

1. A gear shift lever knob (2) comprising
- a knob body (4),
- a knob cavity (10) within said knob body (4), said knob cavity (10) having an opening,
- a knob cavity cover (6), shaped to cover said opening of said knob cavity (10), said knob cavity cover (6) being at least partly transparent, and
- a first illuminating means (12) connected to said knob cavity cover (6), such that said knob cavity cover (6) forms a first light guide for guiding light from said first illuminating means (12),
**characterized in that**
a gear shift graphics (8) is integrated into said knob cavity cover (6).

2. The gear shift lever knob (2) according to claim 1, wherein said knob cavity cover (6) is releasably attachable to said knob body (4).

3. The gear shift lever knob (2) according to claim 1 or 2, wherein a background plate (16) is arranged within said knob cavity (10) below said knob cavity cover (6) in an at least partly overlapping way, said background plate (16) preferably being at least partly reflective.

4. The gear shift lever knob (2) according to claim 3, wherein said background plate (16) is releasably attachable to said knob body (4).

5. The gear shift lever knob (2) according to claim 3 or 4, wherein a gap (g) is provided between said gear shift graphics (8) and said background plate (16).

6. The gear shift lever knob (2) according to claim 5, wherein said gap (g) fulfils 0 < g ≤ 12 mm, preferably 1 ≤ g ≤ 10 mm and most preferably 2 ≤ g ≤ 8 mm.

7. The gear shift lever knob (2) according to any one of the preceding claims, wherein said gear shift graphics (8) is formed as a recess (18) within said knob cavity cover (6), for example by means of moulding, embossing, milling, etching or laser engraving.

8. The gear shift lever knob (2) according to any one of claims 1-6, wherein said gear shift graphics (8) is formed within said knob cavity cover (6), e.g. by means of a local modification (20) of optical properties of said knob cavity cover (6).

9. The gear shift lever knob (2) according to any one of the preceding claims, wherein said gear shift lever knob (2) further comprises at least one second illuminating means (28) for indicating a selected gear lever position.

10. The gear shift lever knob (2) according to claim 9, wherein the second illuminating means (28) is connected to a first end (26) of a second light guide (24), said second light guide (24) having a second end (30) directed towards said gear shift graphics (8).

11. The gear shift lever knob (2) according to claim 10, wherein said second end (30) of said second light guide (24) is directed towards a position indicative of an individual gear lever position in said gear shift graphics (8).

12. The gear shift lever knob (2) according to claim 10 or 11, when dependent on any one of claims 3-6, wherein said second light guide (24) passes through a hole (32) in said background plate (16) such that said first end (26) is connected to said second illuminating means (28) at a side of said background plate (16) facing away from said knob cavity cover (6), and said second end (30) protrudes beyond said background plate (16) towards said knob cavity cover (6).

13. The gear shift lever knob (2) according to claim 12, wherein the distance d between said second end (30) of said second light guide (24) and said knob cavity cover (6) fulfils 0 ≤ d ≤ g, with g being said gap between said gear shift graphics (6) and said background plate (16), preferably 0 < d ≤ 4 mm and most preferably, 0 < d ≤ 2 mm.

14. A knob cavity cover (6), shaped to cover an opening of a knob cavity (10) in a gear shift lever knob (2) according to any one of claims 1 to 13, said knob cavity cover (6) being at least partly transparent, and comprising a gear shift graphics (8) integrated into said knob cavity cover (6).

15. A vehicle comprising a gear shift lever knob (2) according to any one of the preceding claims.

## Patentansprüche

1. Schalthebelknauf (2), Folgendes umfassend:
- einen Knaufkörper (4),
- einen Knaufhohlraum (10) innerhalb des Knaufkörpers (4), wobei der Knaufhohlraum (10) eine Öffnung aufweist,
- eine Knaufhohlraumabdeckung (6), die dafür geformt ist, die Öffnung des Knaufhohlraumes (10) abzudecken, wobei die Knaufhohlraumabdeckung (6) mindestens teilweise transparent ist, und
- ein erstes Leuchtmittel (12), das derart mit der Knaufhohlraumabdeckung (6) verbunden ist, dass die Knaufhohlraumabdeckung (6) einen ersten Lichtleiter zum Leiten von Licht aus dem ersten Leuchtmittel (12) bildet,
**dadurch gekennzeichnet, dass**
in die Knaufhohlraumabdeckung (6) ein Schaltschema (8) integriert ist.

2. Schalthebelknauf (2) nach Anspruch 1, wobei die Knaufhohlraumabdeckung (6) abnehmbar am Knaufkörper (4) angebracht werden kann.

3. Schalthebelknauf (2) nach Anspruch 1 oder 2, wobei im Knaufhohlraum (10) unter der Knaufhohlraumabdeckung (6) in einer mindestens teilweise überlappenden Weise eine Hintergrundplatte (16) angeordnet ist, wobei die Hintergrundplatte (16) mindestens teilweise reflektierend ist.

4. Schalthebelknauf (2) nach Anspruch 3, wobei die Hintergrundplatte (16) abnehmbar am Knaufkörper (4) angebracht werden kann.

5. Schalthebelknauf (2) nach Anspruch 3 oder 4, wobei zwischen dem Schaltschema (8) und der Hintergrundplatte (16) ein Spalt (g) bereitgestellt ist.

6. Schalthebelknauf (2) nach Anspruch 5, wobei der Spalt (g) die Bedingung 0 < d ≤ 12 mm erfüllt, vorzugsweise 1 ≤ g ≤ 10 mm und am stärksten bevorzugt 2 ≤ g ≤ 8 mm.

7. Schalthebelknauf (2) nach einem der vorhergehenden Ansprüche, wobei das Schaltschema (8) als eine Vertiefung in der Knaufhohlraumabdeckung (6) gebildet ist, zum Beispiel mittels Formpressen, Prägen, Schleifen, Ätzen oder Lasergravieren.

8. Schalthebelknauf (2) nach einem der Ansprüche 1 bis 6, wobei das Schaltschema (8) in der Knaufhohlraumabdeckung (6) zum Beispiel mittels einer örtlichen Veränderung (20) optischer Eigenschaften der Knaufhohlraumabdeckung (6) gebildet ist.

9. Schalthebelknauf (2) nach einem der vorhergehenden Ansprüche, wobei der Schalthebelknauf (2) ferner mindestens ein zweites Leuchtmittel (28) umfasst, um eine gewählte Ganghebelposition anzuzeigen.

10. Schalthebelknauf (2) nach Anspruch 9, wobei das zweite Leuchtmittel (28) mit einem ersten Ende (26) eines zweiten Lichtleiters (24) verbunden ist, wobei der zweite Lichtleiter (24) ein zweites Ende (30) aufweist, das hin zum Schaltschema (8) gerichtet ist.

11. Schalthebelknauf (2) nach Anspruch 10, wobei das zweite Ende (30) des zweiten Lichtleiters (24) hin zu einer Position gerichtet ist, die eine bestimmte Ganghebelposition im Schaltschema (8) anzeigt.

12. Schalthebelknauf (2) nach Anspruch 10 oder 11, wenn abhängig von einem der Ansprüche 3 bis 6, wobei der zweite Lichtleiter (24) derart durch ein Loch (32) in der Hintergrundplatte (16) verläuft, dass das erste Ende (26) mit dem zweiten Leuchtmittel (28) an einer Seite der Hintergrundplatte (16), die von der Knaufhohlraumabdeckung (6) abgewandt ist, verbunden ist und das zweite Ende (30) über die Hintergrundplatte (16) hinaus hin zur Knaufhohlraumabdeckung (6) ragt.

13. Schalthebelknauf (2) nach Anspruch 12, wobei der Abstand d zwischen dem zweiten Ende (30) des zweiten Lichtleiters (24) und der Knaufhohlraumabdeckung (6) die Bedingung 0 ≤ d ≤ g erfüllt, wobei g der Spalt zwischen dem Schaltschema (8) und der Hintergrundplatte (16) ist, vorzugsweise 0 < d ≤ 4 mm und am stärksten bevorzugt 0 < d ≤ 2 mm.

14. Knaufhohlraumabdeckung (6), die dafür geformt ist, eine Öffnung eines Knaufhohlraums (10) in einem Schalthebelknauf (2) abzudecken, nach einem der Ansprüche 1 bis 13, wobei die Knaufhohlraumabdeckung (6) mindestens teilweise transparent ist und ein Schaltschema (8) umfasst, das in die Knaufhohlraumabdeckung (6) integriert ist.

15. Fahrzeug, einen Schalthebelknauf (2) nach einem der vorhergehenden Ansprüche umfassend.

## Revendications

1. Pommeau de levier de changement de vitesses (2) comprenant :
- un corps de pommeau (4),
- une cavité de pommeau (10) à l'intérieur dudit corps de pommeau (4), ladite cavité de pommeau (10) ayant une ouverture,
- un recouvrement de cavité de pommeau (6), formé de manière à recouvrir ladite ouverture de ladite cavité de pommeau (10), ledit recouvrement de cavité de pommeau (6) étant au moins en partie transparent, et
- un premier moyen d'éclairage (12) connecté audit recouvrement de cavité de pommeau (6), de telle sorte que ledit recouvrement de cavité de pommeau (6) forme un premier guide de lumière pour guider la lumière depuis ledit premier moyen d'éclairage (12),
**caractérisé en ce**
**qu'**un dessin (8) de changement de vitesses est intégré dans ledit recouvrement de cavité de pommeau (6).

2. Pommeau de levier de changement de vitesses (2) selon la revendication 1, dans lequel ledit recouvrement de cavité de pommeau (6) peut être attaché de manière amovible audit corps de pommeau (4).

3. Pommeau de levier de changement de vitesses (2) selon la revendication 1 ou 2, dans lequel une plaque de fond (16) est agencée à l'intérieur de ladite cavité de pommeau (10) en dessous dudit recouvrement de cavité de pommeau (6) de manière à la chevaucher au moins en partie, ladite plaque de fond (16) étant de préférence au moins en partie réfléchissante.

4. Pommeau de levier de changement de vitesses (2) selon la revendication 3, dans lequel ladite plaque de fond (16) peut être attachée de manière amovible audit corps de pommeau (4).

5. Pommeau de levier de changement de vitesses (2) selon la revendication 3 ou 4, dans lequel un espace (g) est prévu entre ledit dessin (8) de changement de vitesses et ladite plaque de fond (16).

6. Pommeau de levier de changement de vitesses (2) selon la revendication 5, dans lequel ledit espace (g) satisfait aux conditions suivantes, 0 < g ≤ 12 mm, de préférence 1 ≤ g ≤ 10 mm et plus préférablement 2 ≤ g ≤ 8 mm.

7. Pommeau de levier de changement de vitesses (2) selon l'une quelconque des revendications précédentes, dans lequel ledit dessin (8) de changement de vitesses est formé en tant que retrait (18) dans ledit recouvrement de cavité de pommeau (6), par exemple par moulage, gaufrage, fraisage, gravure chimique ou gravure au laser.

8. Pommeau de levier de changement de vitesses (2) selon l'une quelconque des revendications 1 à 6, dans lequel ledit dessin (8) de changement de vitesses est formé à l'intérieur dudit recouvrement de cavité de pommeau (6), par exemple au moyen d'une modification locale (20) des propriétés optiques dudit recouvrement de cavité de pommeau (6).

9. Pommeau de levier de changement de vitesses (2) selon l'une quelconque des revendications précédentes, dans lequel ledit pommeau de levier de changement de vitesses (2) comprend en outre au moins un deuxième moyen d'éclairage (28) pour indiquer une position de levier de changement de vitesses sélectionnée.

10. Pommeau de levier de changement de vitesses (2) selon la revendication 9, dans lequel le deuxième moyen d'éclairage (28) est connecté à une première extrémité (26) d'un deuxième guide de lumière (24), ledit deuxième guide de lumière (24) ayant une deuxième extrémité (30) orientée vers ledit dessin (8) de changement de vitesses.

11. Pommeau de levier de changement de vitesses (2) selon la revendication 10, dans lequel ladite deuxième extrémité (30) dudit deuxième guide de lumière (24) est orientée vers une position indiquant une position du levier de changement de vitesses individuelle dans ledit dessin (8) de changement de vitesses.

12. Pommeau de levier de changement de vitesses (2) selon la revendication 10 ou 11, lorsqu'elles dépendent de l'une quelconque des revendications 3 à 6, dans lequel ledit deuxième guide de lumière (24) passe à travers un trou (32) dans ladite plaque de fond (16), de telle sorte que ladite première extrémité (26) soit connectée audit deuxième moyen d'éclairage (28) au niveau d'un côté de ladite plaque de fond (16) détourné dudit recouvrement de cavité de pommeau (6), et que ladite deuxième extrémité (30) fasse saillie au-delà de ladite plaque de fond (16) vers ledit recouvrement de cavité de pommeau (6).

13. Pommeau de levier de changement de vitesses (2) selon la revendication 12, dans lequel la distance d entre ladite deuxième extrémité (30) dudit deuxième guide de lumière (24) et ledit recouvrement de cavité de pommeau (6) satisfait à la relation 0 ≤ d ≤ g, g étant ledit espace entre ledit dessin (8) de changement de vitesses et ladite plaque de fond (16), de préférence 0 < d ≤ 4 mm et plus préférablement 0 ≤ d ≤ 2 mm.

14. Recouvrement de cavité de pommeau (6), formé de manière à recouvrir une ouverture d'une cavité de pommeau (10) dans un pommeau de levier de changement de vitesses (2) selon l'une quelconque des revendications 1 à 13, ledit recouvrement de cavité de pommeau (6) étant au moins en partie transparent, et comprenant un dessin (8) de changement de vitesses intégré dans ledit recouvrement de cavité de pommeau (6).

15. Véhicule comprenant un pommeau de levier de changement de vitesses (2) selon l'une quelconque des revendications précédentes.
